# EUROPEAN PATENT SPECIFICATION

(11) **EP 1 986 170 B1**
(45) Date of publication and mention of the grant of the patent: **20.04.2011**
(21) Application number: 08008044.3
(22) Date of filing: 25.04.2008
(51) Int. Cl.: G08G 1/01, G01S 5/14

(54) **Traffic situation determination system**
System zur Bestimmung einer Verkehrssituation
Système de détermination d'une situation de trafic

(30) Priority: 26.04.2007 JP 2007117162
(43) Date of publication of application: 29.10.2008
(73) Proprietor: Aisin AW Co., Ltd., Fujii-cho Anjo-shi, Aichi 444-1192 (JP)
(72) Inventor: Ishikawa, Hiroki c/o Aisin AW Co., Ltd., Okazaki-shi Aichi 444-8564 (JP); Yamamoto, Yukio c/o Aisin AW Co., Ltd., Okazaki-shi Aichi 444-8564 (JP); Kano, Toshihiro c/o Aisin AW Co., Ltd., Okazaki-shi Aichi 444-8564 (JP)
(74) Representative: Kramer - Barske - Schmidtchen

(56) References cited:
- WO-A1-96/07110
- WO-A2-2006/086398
- JP-A- 2004 287 804
- US-A1- 2007 038 360

## Description

### 1. Field of the Invention

The present invention relates to a traffic situation determination system which determines a traffic situation on a road.

### 2. Description of the Related Art

In-vehicle navigation devices, personal digital assistants (PDAs), mobile information instruments such as a mobile phone, personal computers, and the like have been capable of displaying a map of a desired area to a user by storing information of roads such as a general road and an expressway, facility names, and the like as map information in various storage devices or downloading such information from a server and the like.

Further, navigation devices of the related art and the like, not only display a map but also provide traffic information such as traffic jam information of a displayed road in order to improve the user's convenience. As a new system of acquiring the traffic information, a probe car system, in which a traveling vehicle acts as a sensor (probe) to gather information (hereinafter, referred to as probe information), such as a current position (travel path), speed, and the like measured on the vehicle to an information center (probe center) and produce the traffic information, is currently under research. For example, Japanese Patent Application Publication No. JP-A-2004-234649 (page 5 and FIG. 2) discloses a system which accumulates the probe information gathered from a probe car, generates the traffic information by performing a statistical process on the accumulated information, and provides the traffic information to a terminal such as a navigation device and a PC.

Generally, when transmitting information relating to the current position of a vehicle and the like to an information center from the vehicle, the transmission is performed via a communication terminal such as a mobile phone and a PHS provided in the vehicle. Therefore, there has been a problem in that the number of times of communication and the amount of communication data become extremely large, thereby resulting in high communication fees, if the information relating to the current position and the like of the vehicle is constantly transmitted to the information center while the vehicle is traveling. On the other hand, the reliability of the traffic information generated in the information center decreases, if only limited data is transmitted in limited times.

In the related art, a vehicle position has been specified using a mobile phone installed in a vehicle. Specifically, the current position of the mobile phone (i.e., of the vehicle) in a mobile phone communication network can be identified by a known enhanced observed time difference (E-OTD) method, a time-difference-of-arrival (TDOA) method, a cell-ID method, and the like. The information is gathered to the information center via the mobile phone communication network, whereby the position of the vehicle can be specified on the information center side without performing a communication with the vehicle. However, the accuracy of the specification of the vehicle position based on the mobile phone communication network is low, whereby the reliability of the traffic information decreases when the traffic information is generated based only on the information thereof.

US 2007/0038360 A1 relates to a method for providing traffic alerts based on cellular, digital and/or other phones or mobile devices that implement positioning technology, such as global positioning system (GPS). This method is used in a system comprising a network server and a plurality of mobile devices that communicate with the network server, each mobile device being associated with a vehicle and being configured to provide the global positioning system parameters to the network server, wherein the network server uses the GPS parameters to detect traffic congestion in a zone.

The present invention is provided to solve the aforementioned problems of the related art, and it is an object of the present invention to provide a traffic situation determination system which can maintain the accuracy of travel path information of the vehicle used for determining traffic jam situation, which is one of the important traffic information for the vehicle side, thereby accurately determining traffic jam situation, and can decrease the number of times of communication and the amount of communication data for communication between the vehicle and an information center, thereby reducing a communication processing load and communication fees.

This object is solved by the subject-matter of claim 1. Further developments are given in the dependent claims.

A traffic situation determination system according to a first aspect of the present invention maintains the accuracy of travel path information of the vehicle used for determining traffic jam situation, which is one of the important traffic information for the vehicle side, thereby determining traffic jam situation, and also decreases the number of times of communication and the amount of communication data for communication between the vehicle and an information center, thereby reducing a communication processing load and communication fees.

A traffic situation determination system according to a second aspect of the present invention corrects travel path information of the vehicle specified in a mobile phone communication network, which is less accurate than travel path specified based on radio signals from a satellite, thereby determining traffic situation accurately, while decreasing the number of times of communication and the amount of communication data for communication between the vehicle and an information center.

A traffic situation determination system according to a third aspect of the present invention increases the amount of communication data transmitted from a vehicle to a communication center within an identical communication fee range so as to enhance the accuracy of vehicle travel paths detected on the information center side without an increase in communication fees, thereby determining traffic situation becomes further accurately.
FIG. 1 is a schematic configuration diagram showing a traffic situation determination system according to an embodiment of the present invention;
FIG. 2 is a block diagram particularly showing the configuration of a probe center in a traffic situation determination system according to the present embodiment;
FIG. 3 is a block diagram particularly showing the configuration of a navigation device in the traffic situation determination system according to the present embodiment;
FIG. 4 is a flowchart of a traffic situation determination program according to the present embodiment;
FIG. 5 is an illustrative diagram illustrating a correction process of travel paths in step 13; and
FIG. 6 is a schematic view showing the amount of communication data for transmitting travel path information from a vehicle to the probe center.

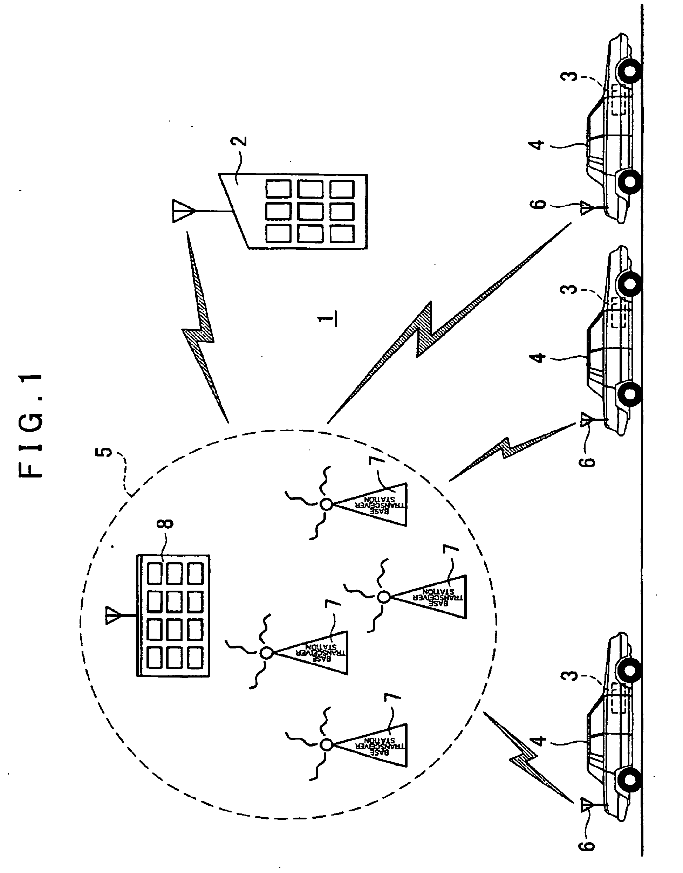

A traffic situation determination system according to an embodiment of the present invention will be described with reference to the drawings.
First, the schematic configuration of the traffic situation determination system 1 according to the present embodiment will be described using FIG. 1. FIG. 1 is a schematic configuration diagram showing the traffic situation determination system 1 according to this embodiment.

As shown in FIG. 1, the traffic situation determination system 1 according to this embodiment is formed basically of a probe center (information center) 2 which gathers probe information and performs generation/delivery of traffic information based on the gathered probe information, a vehicle 4 as a probe car installed with a navigation device 3, and a mobile phone communication network 5 which links mobile phones to enable interactive communication.

The probe center 2 is a traffic information delivery center which gathers and accumulates the probe information including information relating to the current position of the vehicle 4 transmitted from each vehicle 4 traveling in various areas of the nation, generates the traffic information such as traffic jam information from the accumulated probe information, and delivers the generated traffic information (hereinafter referred to as probe traffic information) to the vehicle 4. In the traffic situation determination system 1 according to this embodiment, information relating to the travel path of the vehicle 4 specified by the mobile phone communication network 5 is also gathered via the mobile phone communication network 5. The probe center 2 determines the traffic jam situation at each link based on the information relating to the travel path of the vehicle 4 gathered from the vehicle 4 and via the mobile phone communication network 5, and generates the traffic information based on the determination results.

The vehicle 4 is a vehicle traveling on each road in the nation, and, as a probe car, forms a probe car system together with the probe center 2. The probe car system is a system which gathers information with the vehicle acting as a sensor. Specifically, the probe car system is a system in which the vehicle transmits an operational state of each system such as speed data, steering action, shift position, and the like together with position information of the vehicle detected by a global positioning system (GPS) to the probe center 2 via a mobile phone 6 as a communication module installed in the vehicle in advance, and in which the gathered data is reused as various information on the center side.
The probe information acquired by the vehicle 4 and transmitted to the probe center 2 in the traffic situation determination system 1 according to this embodiment particularly includes the information relating to the travel path of the traveling vehicle 4.

Further, the vehicle 4 is provided with the navigation device 3. The navigation device 3 is an in-vehicle equipment which displays a map around the position of the vehicle based on stored map data and performs search and guidance of a route to a set destination. The navigation device 3 also performs guidance considering the probe traffic information received from the probe center 2 for the user. Further, as described below, the navigation device 3 performs a process of calculating the degree of traffic jam on roads based on a travel history, and a process of transmitting the probe information relating to the travel path of the vehicle detected by the GPS, in particular if the degree of traffic jam is calculated to be traffic jam or congestion, to the probe center 2. Note that a detailed configuration of the navigation device 3 is described below.

The mobile phone communication network 5 includes a number of base transceiver stations 7 located in various areas of the nation and a mobile phone company 8 which manages and controls each base transceiver station 7, and is formed of a wired (optical fiber, ISDN, and the like) or wireless connection of the base transceiver stations 7 and the mobile phone company 8 with each other.
The base transceiver station 7 has a transceiver (transmitter/receiver) which communicates with the mobile phone 6 in motion, and an antenna. The base transceiver station 7 acts as a terminal of the mobile phone communication network 5 which serves to relay a call and communication of the mobile phones 6 within a range (cell) in which radio signals from the base transceiver station 7 can be reached, to the mobile phone communication network 5 while performs a wireless communication with the mobile phone company 8.
The mobile phone communication network 5 identifies the current position of the mobile phone 6 (i.e., of the vehicle 4) by a known enhanced observed time difference (E-OTD) method, a time difference of arrival (TDOA) method, a cell-ID method, and the like. For example, in the cell-ID method, a signal is received from the mobile phone 6, whereby a cell (sector in the case where the cell is divided in units of sectors) in which the mobile phone 6 exists is specified to measure the position of the vehicle 4. In this case, if the mobile phone communication network 5 limits the target to in-vehicle communication instruments, the position of the mobile phone 6 can be recognized as the position of the vehicle 4. Note that the mobile phone communication network 5 can constantly identify the position of the mobile phone 6 (i.e., of the vehicle 4) without the expense of communication fees.
The mobile phone company 8 is a communication management center which performs communication with the base transceiver stations 7 in each area and transmits the information relating to the travel path of the vehicle 4 identified by the mobile phone communication network 5 to the probe center 2. Note that a data communication module (DCM) may be used as the mobile phone 6.

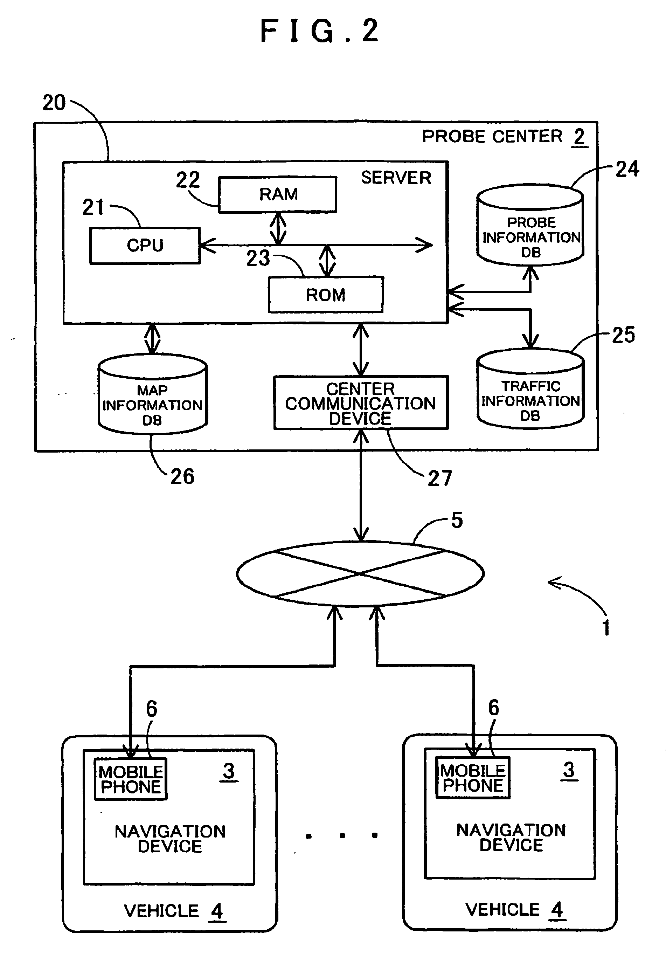

Next, the configuration of the probe center 2 forming the traffic situation determination system 1 is described in detail using FIG. 2. FIG. 2 is a block diagram showing the configuration of the traffic situation determination system 1 according to this embodiment.

The probe center 2 includes a server (traffic jam road determination unit, travel path information acquisition unit, non traffic jam road determination unit, correction unit) 20, a probe information DB 24 as an information storage connected to the server 20, a traffic information DB 25, a map information DB 26, and a center communication device 27, as shown in FIG. 2.

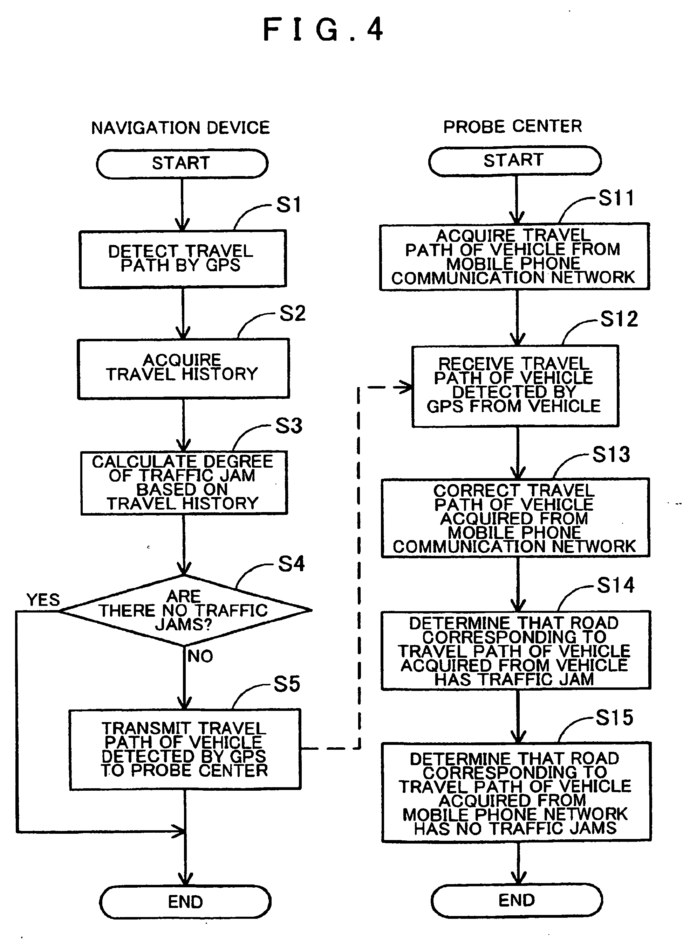

The server 20 is a control section which performs various controls in the probe center 2, such as a correction process of correcting the position information of the vehicle 4 acquired via the mobile phone communication network 5 based on the travel path information of the vehicle 4 acquired from the vehicle 4, a traffic jam situation determination process of determining the traffic jam situation on roads by a statistical process of the probe information gathered from the vehicle 4 and via the mobile phone communication network 5, and a traffic information delivery process of producing various traffic information including the traffic jam situation on roads and delivering the various traffic information to the vehicle 4. The server 20 includes a CPU 21 as an arithmetic device and a control device, and an internal storage device such as a RAM 22 used as a working memory when the CPU 21 performs various arithmetic processes, a ROM 23 which stores various control programs, a traffic situation determination program described below (see FIG. 4) and the like.

The probe information DB 24 is a storage unit which cumulatively stores the probe information gathered from vehicles 4 traveling across the nation and the information relating to the travel paths of each of the vehicles 4 gathered via the mobile phone communication network 5. Note that, in this embodiment, the probe information gathered from the vehicle 4 particularly includes position coordinates (a travel path) showing a traveling position of the vehicle 4.

The traffic information DB 25 is a storage unit which stores probe statistical traffic information generated by the server 20 by performing a statistical process on the probe information stored in the probe information DB 24. The probe statistical traffic information includes information such as a proceeding direction of the link, a link travel time, the average vehicle speed, the degree of traffic jam at the link, and the like.

The map information DB 26 is a storage which stores, for example, link data relating to roads (links), node data relating to node points, map display data for displaying a map, intersection data relating to intersections, search data for searching a route, facility data relating to facilities, and retrieval data for retrieving a location. The server 20 performs the map matching process of specifying the position of the vehicle 4 on a map based on the travel path information of the vehicle acquired from the vehicle 4 and via the mobile phone communication network 5 and map information stored in the map information DB 26.

The center communication device 27 is a communication device for performing communication with the vehicle 4 via the mobile phone communication network 5. The probe center 2 in this embodiment acquires information relating to the travel path of the vehicle 4 specified in the mobile phone communication network 5 via the center communication device 27.

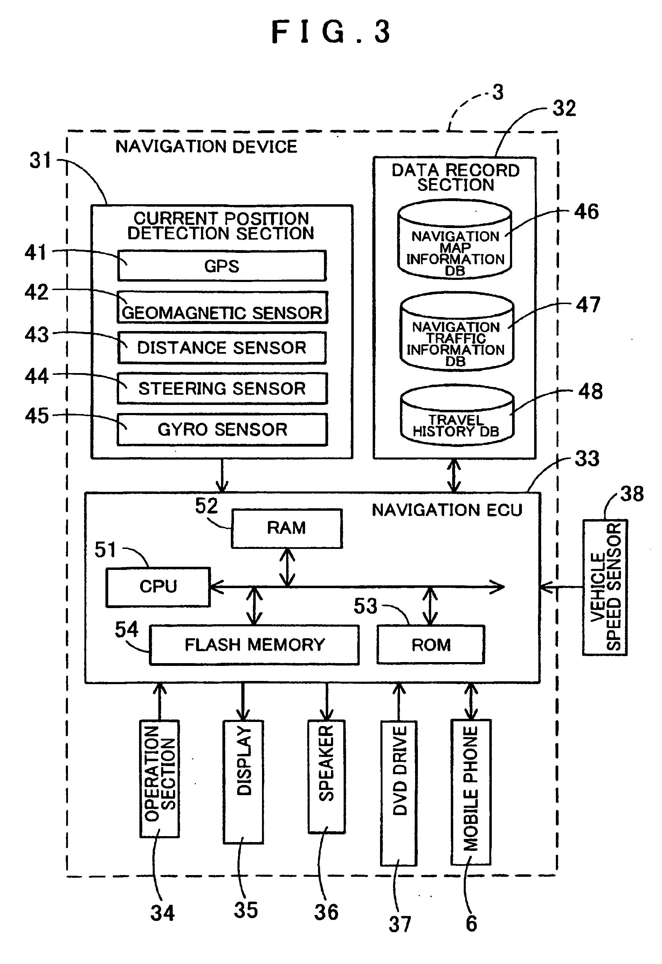

Next, the schematic configuration of the navigation device 3 installed in the vehicle 4 is described using FIG. 3. FIG. 3 is a block diagram showing the navigation device 3 according to this embodiment.
As shown in FIG. 3, the navigation device 3 according to this embodiment is formed of a current position detection section 31 which detects the current position of the vehicle, a data record section 32 which stores various data, a navigation ECU (vehicle travel path acquisition unit, traffic jam determination unit, and information transmission unit) 33 which performs various arithmetic processes based on input information, an operation section 34 which accepts an operation from an operator, a display 35 which displays information such as a map to the operator, a speaker 36 which outputs voice guidance relating to route guidance, a DVD drive 37 which reads a DVD as a storage medium storing a program, and the mobile phone 6 which performs communication with the probe center 2. The navigation ECU 33 is connected with a vehicle speed sensor 38 which detects the traveling speed of the vehicle.

Description on each component forming the navigation device 3 is given below. The current position detection section 31 is formed of a GPS (GPS receiver) 41, a geomagnetic sensor 42, a distance sensor 43, a steering sensor 44, a gyro sensor 45 as a direction detection section, an altimeter (not shown), for example, and is capable of detecting the current position of the vehicle, a direction, a distance to an object (for example, an intersection), and the like. The GPS 41 is a receiver which receives GPS signals from a GPS satellite, and the navigation ECU 33 acquires a GPS measurement point which specifies the current position of the vehicle based on the GPS signals received by the GPS 41.

The data record section 32 includes a hard disk (not shown) as an external storage device and a storage medium, and a recording head (not shown) as a driver for reading a navigation map information DB 46, a navigation traffic information DB 47, a travel history DB 48, a predetermined program, and the like recorded in a hard disk, and for writing predetermined data on the hard disk.

The navigation map information DB 46 basically has the same configuration as that of the map information DB 26 of the probe center 2, and is a storage unit which stores, for example, link data relating to roads (links), node data relating to node points, map display data for displaying a map, intersection data relating to intersections, search data for searching a route, facility data relating to facilities, and retrieval data for retrieving a location.

The navigation traffic information DB 47 is a storage which stores the probe statistical traffic information delivered from the probe center 2 and VICS information delivered from a VICS center. The navigation ECU 33 performs route search and traffic information guidance using the traffic information stored in the navigation traffic information DB 47.

The travel history DB 48 is a storage which accumulatively stores, for example, results detected by various sensors while the vehicle 4 is traveling (e.g., the current position, speed, steering angle, and brake application force of the vehicle). The navigation ECU 33 calculates the degree of traffic jam on a road on which the vehicle travels (the road on which the vehicle is traveling in the present embodiment) based on the travel history stored in the travel history DB 48.

The navigation electronic control unit (ECU) 33 is an electronic control unit which performs an overall control of the navigation device 3 such as a guidance route set process of setting a guidance route to the destination from the current position in the case where the destination is selected, a traffic jam degree calculation process of calculating the degree of traffic jam on a road on which the vehicle is traveling based on the travel history, and an information transmission process of transmitting, as the probe information, the current position of the vehicle acquired by the current position detection section 31 to the probe center 2 in the case where the degree is calculated as traffic jam or congestion. The navigation ECU 33 includes a CPU 51 as an arithmetic device and a control device, an internal storage device such as a RAM 52 which is used as a working memory when the CPU 51 performs various arithmetic processes and stores route data and the like of a searched route, a ROM 53 in which a control program, the traffic situation determination program described below (see FIG. 4) and the like are recorded, and a flash memory 54 in which a program read from the ROM 53 is recorded, and.

Next, the traffic situation determination program, which is executed in the navigation device 3 and the probe center 2 forming the traffic situation determination system 1 having the configuration described above, is described based on FIG. 4. FIG. 4 is a flowchart of the traffic situation determination program according to this embodiment. The traffic situation determination program is a program which is executed at predetermined intervals (for example, 200 ms) and determines the traffic jam situation in the probe center 2 based on the travel path information acquired by the vehicle 4 and via the mobile phone communication network 5. Note that the program shown in the flowchart of FIG. 4 described below is stored in the RAM, ROM, or the like included in the navigation ECU 33 or the server 20, and is executed by the CPU 51 or the CPU 21.

First, the traffic situation determination program executed by the navigation device 3 is described. In step (hereinafter abbreviated as S) 1, the GPS 41 receives GPS signals from the GPS satellite, whereby the CPU 51 detects the travel path of the vehicle. The current time is also detected. Note that the acquired travel path of the vehicle in this case is a GPS measurement point (latitude and longitude). The S 1 corresponds to a process of the vehicle travel path acquisition unit.

Subsequently, in S2, the CPU 51 reads out the travel history of the vehicle from the travel history DB 48. The read out travel history may be a travel history until now from a predetermined time (e.g., one minute) before, or may be a travel history related to the link on which the vehicle is traveling.

Next, in S3, the CPU51 calculates the degree of traffic jam on the road (link) on which the vehicle is traveling based on the traveling history acquired in S2. The degree of traffic jam is a type of traffic jam information representing the level of traffic jam, and includes three degrees of traffic jam, congestion, and no traffic jams in the descending order. The degree of traffic jam is determined based on thresholds set depending on the speed of the traveling vehicle and the type of the road (for example, the threshold for a general road is 12 km/h between traffic jam and congestion, and 32 km/h between congestion and no traffic jams).

Next, in S4, the CPU51 determines whether the degree of traffic jam on the road on which the vehicle is traveling calculated in the S3 is no traffic jams. If the degree of traffic jam on the road on which the vehicle is traveling is determined to be traffic jam or congestion (NO in S4), the process moves onto S5. In S5, the information relating to the travel path of the vehicle detected by the GPS 41 in S 1 (namely, the travel path of the vehicle traveling on the road determined to have the degree of traffic jam or congestion) and the detection time of the travel path are transmitted as probe information to the probe center 2 through the mobile phone 6. Note that the information relating to the travel path of the vehicle transmitted to the probe center 2 may be not only the position coordinates (x, y) specifying the position of the vehicle but also a link number of a link in which the vehicle is located, specified by performing a map matching, or position coordinates corrected by the map matching process. Further, the speed of the vehicle or the traveling direction, for example, may also be transmitted together. Note that the S4 corresponds to a process of the traffic jam determination unit, and the S5 corresponds to a process of the information transmission unit.

If the degree of traffic jam on the road on which the vehicle is traveling is determined to be no traffic jams (YES in S4), the traffic situation determination program is completed without transmitting the information relating to the travel path of the vehicle detected by the GPS 41 in S1 to the probe center 2.

Next, the traffic situation determination program executed by the probe center 2 is described. First, in 511, the CPU 21 acquires the travel path information, specified in the mobile phone communication network 5, of vehicles 4 traveling across the nation from the mobile phone company 8 via the center communication device 27. The time corresponding to the travel path of each of the vehicles 4 (i.e., time at which the vehicle has traveled on the path) is also acquired. Note that the travel path information of the vehicle 4 to be acquired may be travel path information in real time or travel path information of a predetermined period in the past. Examples of a method for specifying the travel path of the vehicle via the mobile phone communication network 5 may include the E-OTD, TDOA, and cell-ID methods. The S 11 corresponds to a process of the travel path information acquisition unit.

Subsequently, in S12, the CPU 21 receives the information relating to the travel path of the vehicle 4 based on the GPS 41 and transmitted from the vehicle 4 in the S5.

Then, in S 13, the CPU 21 corrects the travel path information of the vehicle 4 acquired via the mobile phone communication network 5 in the S11, based on the travel path information of the vehicle 4 based on the GPS 41 and received from the vehicle 4 in the S12.

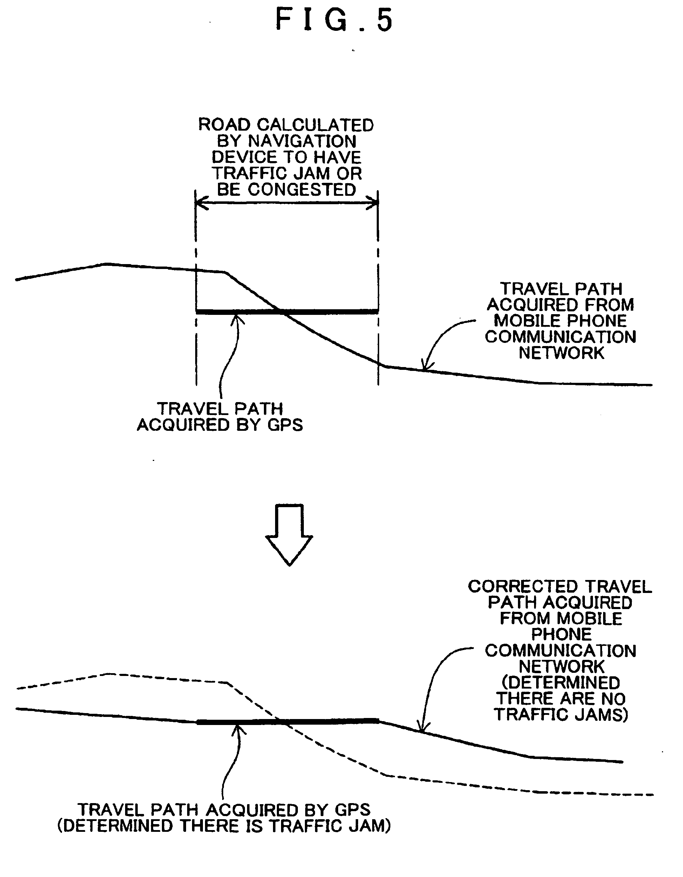

Next, the correction process of travel paths in S 13 is described in details with reference to FIG. 5. As shown in FIG. 5, the probe center 2 acquires two types of travel paths: travel paths of the vehicle 4 acquired via the mobile phone communication network 5, and travel paths of the vehicle 4 based on the GPS 41 transmitted from the vehicle 4. Since the position of the vehicle 4 specified in the mobile phone communication network 5 is less accurate than the position of the vehicle 4 specified by the GPS 41, there is a difference in the two types of travel paths. The travel path information of the vehicle 4 based on the GPS 41 is transmitted from the vehicle 4 with respect to the roads determined to have the degree of, in particular, traffic jam or congestion by the navigation device 3. The probe center 2 side therefore acquires the travel path information of the vehicle 4 based on the GPS 41 with respect to a part of the entire travel paths of the vehicle 4.

Since the position of the vehicle 4 specified by the GPS 41 is more accurate than the position of the vehicle 4 specified in the mobile phone communication network 5, more accurate travel path information of the vehicle can be obtained by correcting the travel path information of the vehicle 4 acquired via the mobile phone communication network 5 based on the travel path information of the vehicle 4 based on the GPS 41, which is available for limited regions. Therefore, in the process of the S13, the travel path information of the vehicle 4 acquired via the mobile phone communication network 5 is corrected such that the travel path of the vehicle 4 based on the GPS 41 becomes continuous with the travel path of the vehicle based on the mobile phone communication network 5, as shown in FIG. 5. The S 13 corresponds to a process of the correction unit.

Next, in S 14, the CPU 21 performs a map matching process on the travel path information of the vehicle 4 that is based on the GPS 41 and is transmitted from the vehicle 4 in the S12, specifies a road corresponding to the travel path information, and determines that the specified road to be in the situation of traffic jam. The S 14 corresponds to a process of the traffic jam road determination unit.

Subsequently, in S 15, the CPU 21 performs a map matching process on the travel path information of the vehicle 4 acquired via the mobile phone communication network 5 in the S11 and corrected in the S 13, specifies roads corresponding to the travel path information, and then determines that roads except for the roads specified in S 14 (to be more specific, roads corresponding to the travel path of the vehicle 4 that is based on the GPS 41 and transmitted from the vehicle 4) to be in the situation of no traffic jams. The S 15 corresponds to a process of the non traffic jam road determination unit.

The travel path information of the vehicle 4 that is based on the GPS 41 and is transmitted form the vehicle 4, the travel path information of the vehicle 4 acquired via the mobile phone communication network 5 and corrected in the S13, and the traffic jam situation determined in the S 14 and S 15 are stored in the probe information DB 24 as the probe information. A statistical process on the stored probe information is carried out at predetermined intervals (for example, 5 minutes, 24 hours, and 1 year), thereby generating the traffic information such as the degree of traffic jam. For example, based on the travel paths of the vehicle 4 in the S14 and the S15, the degree of traffic jam is calculated to be traffic jam in a time period when the degree for the road is determined to be traffic jam at 80% or higher, calculated to be congestion in a time period when the degree for the road is determined to be traffic jam at 50% or higher, and is calculated to be no traffic jams for other occasions.
Note that the generated traffic information is delivered to the vehicle 4, whereby the navigation device 3 installed in the vehicle 4 can perform guidance of the delivered traffic information and set a guidance route depending on the degree of traffic jam.

In the traffic situation determination system 1 according to the present embodiment as described above, the vehicle 4 transmits, when traveling on a road calculated to have the degree of traffic jam or congestion (NO in S4), information relating to the travel path of the vehicle 4 detected by the current position detection section 31 to the probe center 2 (S5). The probe center 2 acquires the travel path information of the vehicle 4 via the mobile phone communication network 5 through the mobile phone 6 (S11), determines roads corresponding to the travel path of the vehicle 4 specified by the GPS 41 to be in the situation of traffic jam (S14), while determines roads corresponding to the travel path of the vehicle 4 specified in the mobile phone communication network 5 to be in the situation of no traffic jams (S15). Therefore, the probe center 2 maintains the accuracy of travel path information of the vehicle used for determining traffic jam situations, thereby determining the traffic jam situation, which is one of the important traffic information for the vehicle, accurately. In addition, the number of times of communication and the amount of communication data for communication between the vehicle 4 and the probe center 2 can be decreased, thereby reducing a communication processing load and communication fees.
Furthermore, correction of the travel path of the vehicle 4 specified in the mobile phone communication network 5, which is less accurate than the travel path specified by the GPS 41, based on the travel path of the vehicle 4 specified by the GPS 41 enables more accurate determination of traffic situations, while the number of times of communication and the amount of communication data for communication between the vehicle 4 and the probe center 2 are decreased.

Note that the present invention is not limited to the embodiment described above, and various modifications and variations may obviously be made without departing from the scope of the present invention.
For example, while the navigation device 3 calculates the degree of traffic jam on the road on which the vehicle is traveling in the S3 in the present embodiment, it may calculate the degree of traffic jam on roads on which the vehicle ran in the past. In this case, the travel path information of the vehicle in the past when the vehicle has traveled roads calculated to have the degree of traffic jam or congestion in the S5 is transmitted to the probe center 2.

While the travel path information transmitted from the vehicle 4 to the probe center 2 is travel path information of the vehicle traveling on a road calculated to have the degree of traffic jam or congestion by the navigation device 3 in the present embodiment, the transmitted information may be limited to the travel path information of the vehicle traveling on a road calculated to have the degree of traffic jam.

While the probe center 2 determines a road corresponding to the travel path of the vehicle 4 specified by the GPS 41 to be in the situation of traffic jam (S14) and thereafter determines a road corresponding to travel paths except for the travel path of the vehicle 4 specified by the GPS 41 to be in the situation of no traffic jams (S15) in the present embodiment, the order of S 14 and S15 may be reversed. Specifically, roads corresponding to the entire travel paths of the vehicle 4 specified in the mobile phone communication network 5 are first determined to have no traffic jams, and the situation may be updated to traffic jam with respect to roads corresponding to the travel path of the vehicle 4 specified by the GPS 41 thereafter.

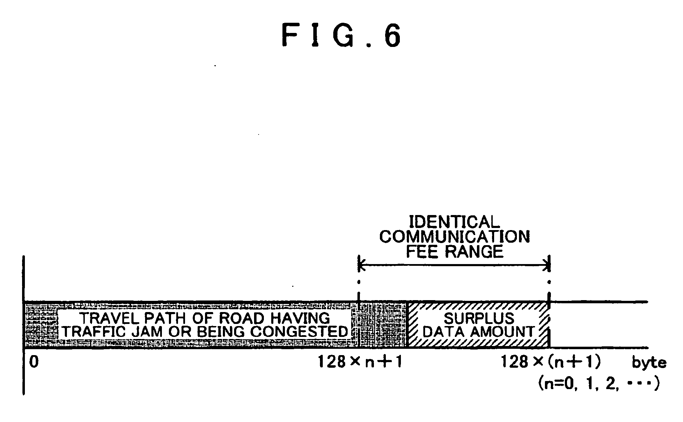

While the travel path information transmitted from the vehicle 4 to the probe center 2 is travel path information of the vehicle traveling on a road calculated to have the degree of traffic jam or congestion by the navigation device 3 in the present embodiment, travel path information of the vehicle traveling not only on a road calculated to have the degree of traffic jam or congestion but also on a road adjacent to the road may be transmitted to the probe center 2. As shown in FIG. 6, the range of the amount of communication data (e.g., from 128*n+1 bytes to 128*(n+1) bytes, where n = 0, 1, 2, ...) that can be communicated through the mobile phone 6 in an identical communication fee range is fixed in advance. Accordingly, in converting the amount of data of travel paths of the vehicle that has traveled on a road calculated to have the degree of traffic jam or congestion into the amount of communication data that can be communicated in an identical communication fee range, an surplus data amount that can be communicated in the identical communication fee range may be available. In this case, transmitting travel path information of the vehicle traveling on roads adjacent to the road calculated to have the degree of traffic jam or congestion, making use of the surplus data amount, it is possible to enhance the accuracy of the travel paths of the vehicle on the information center side without increasing communication fees.
Furthermore, the travel path information of the vehicle traveling on a road calculated to have the degree of traffic jam or congestion and the travel path information of the vehicle on roads adjacent to the road within a predetermined distance range (e.g., within 100 m) may be transmitted to the probe center 2 regardless of the amount of communication data.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A traffic situation determination system (1) comprising:
a vehicle (4);
a mobile phone communication network (5) adapted to recognize a travel path of the vehicle (4); and
an information center (2) adapted to communicate with the vehicle (4) and the mobile phone communication network (5);
the vehicle (4) comprising:
a vehicle travel path acquisition unit (31) adapted to acquire a travel path of the vehicle (4) based on a radio signal from a satellite;
a traffic jam determination unit (33) adapted to determine whether a road on which the vehicle (4) is travelling has a traffic jam; and
an information transmission unit (33) adapted to transmit, when the traffic jam determination unit determines a traffic jam, information relating to the travel path of the vehicle (4) travelling on a road determined to have a traffic jam to the information center (2); and
the information center (2) comprising:
a traffic jam road determination unit adapted to determine roads corresponding to the travel path of the vehicle (4) transmitted by the information transmission unit (33) in a situation of a traffic jam;
a travel path information acquisition unit (20) adapted to acquire the information relating to a travel path of the vehicle (4) acknowledged in the mobile phone communication network (5) from the mobile phone communication network (5); and
a non traffic jam road determination unit (20) adapted to determine that the roads corresponding to the travel path of the vehicle (4) acquired by the travel path information acquisition unit (20), which are not comprised in the roads corresponding to the travel path of the vehicle (4) transmitted by the information transmission unit (33), have no traffic jams.

2. The traffic situation determination system according to claim 1, wherein the information center (2) further comprises a correction unit adapted to correct the travel path of the vehicle (4) acquired by the travel path information acquisition unit (20) based on the travel path of the vehicle (4) transmitted by the information transmission unit (33).

3. The traffic situation determination system according to claim 1 or 2, wherein the information transmission unit (33) transmits, when the traffic jam determination unit (33) determines a traffic jam, information relating to a travel path of the vehicle (4) travelling on a road determined to have a traffic jam and on a road adjacent to the road determined to have a traffic jam to the information center (2).

## Patentansprüche

1. Verkehrssituationsbestimmungssystem (1), enthaltend:
ein Fahrzeug (4);
ein Mobiltelefonkommunikationsnetzwerk (5), das angepasst ist zum Erkennen eines Bewegungswegs des Fahrzeugs (4); und
ein Informationszentrum (2), das angepasst ist zum Kommunizieren mit dem Fahrzeug (4) und dem Mobiltelefonkommunikationsnetzwerk (5);
wobei das Fahrzeug (4) aufweist:
eine Fahrzeugbewegungswegerfassungseinheit (31), die angepasst ist zum Erfassen eines Bewegungswegs des Fahrzeugs (4) basierend auf einem Funksignal von einem Satelliten;
eine Verkehrsstaubestimmungseinheit (33), die angepasst ist zum Bestimmen, ob eine Straße auf der das Fahrzeug (4) sich bewegt, einen Verkehrsstau aufweist; und
eine Informationsübertragungseinheit (33), die angepasst ist zum Übertragen, wenn die Verkehrsstaubestimmungseinheit einen Verkehrsstau bestimmt, einer Information bezüglich des Bewegungswegs des Fahrzeugs (4), das auf einer Straße fährt, für die bestimmt worden ist, dass sie einen Verkehrsstau aufweist, an das Informationszentrum (2); und
das Informationszentrum (2) aufweist:
eine Verkehrsstaustraßenbestimmungseinheit, die angepasst ist zum Bestimmen von Straßen, die dem Bewegungsweg des Fahrzeugs (4) entsprechen, der von der Informationsübertragungseinheit (33) übertragen worden ist, in einer Situation eines Verkehrsstaus;
eine Bewegungsweginformationserfassungseinheit (20), die angepasst ist zum Erfassen der Information bezüglich eines Bewegungswegs des Fahrzeugs (4), der in dem Mobiltelefonkommunikationsnetzwerk (5) rückgemeldet wird, von dem Mobiltelefonkommunikationsnetzwerk (5);
eine Kein-Verkehrsstau-Straßenbestimmungseinheit (20), die angepasst ist zum Bestimmen, dass die Straßen, die dem Bewegungsweg des Fahrzeugs (4) entsprechen, der von der Bewegungsweginformationserfassungeinheit (20) erfasst worden ist, die nicht in den Straßen enthalten sind, die dem Bewegungsweg des Fahrzeugs (4) entsprechen, der von der Informationsübertragseinheit (33) übertragen worden sind, keine Verkehrsstaus aufweisen.

2. Verkehrssituationsbestimmungssystem nach Anspruch 1, bei dem das Informationszentrum (2) ferner eine Korrektureinheit enthält, die angepasst ist zum Korrigieren des Bewegungswegs des Fahrzeugs (4), der von der Bewegungsweginformationserfassungseinheit (20) erfasst worden ist, basierend auf dem Bewegungsweg des Fahrzeugs (4), der von der Informationsübertragungseinheit (33) übertragen worden ist.

3. Verkehrssituationsbestimmungssystem nach Anspruch 1 oder 2, bei dem die Informationsübertragungseinheit (33), wenn die Verkehrsstaubestimmungseinheit (33) einen Verkehrsstau bestimmt, der einen Bewegungsweg des Fahrzeugs (4) betrifft, das auf einer Straße fährt, für die bestimmt worden ist, dass sie einen Verkehrsstau aufweist, und auf einer Straße benachbart zu der Straße, für die bestimmt worden ist, dass sie einen Verkehrsstau aufweist, Information an das Informationszentrum (2) überträgt.

## Revendications

1. Système de détermination de situation de circulation (1), comprenant :
un véhicule (4) ;
un réseau de communication de téléphone mobile (5) adapté pour reconnaître un trajet de déplacement du véhicule (4) ; et
un centre d'informations (2) adapté pour communiquer avec le véhicule (4) et le réseau de communication de téléphone mobile (5) ;
le véhicule (4) comprenant :
un unité d'acquisition de trajet de déplacement de véhicule (31) adapté pour acquérir un trajet de déplacement du véhicule (4) sur la base d'un signal radio à partir d'un satellite ;
une unité de détermination d'embouteillage (33) adaptée pour déterminer si une route sur laquelle le véhicule (4) se déplace présente un embouteillage ; et
une unité de transmission d'informations (33) adaptée pour transmettre, lorsque l'unité de détermination d'embouteillage détermine qu'un embouteillage est présent, des informations concernant le trajet de déplacement du véhicule (4) se déplaçant sur une route sur laquelle la présence d'un embouteillage a été déterminée, au centre d'informations (2) ; et
le centre d'informations (2) comprenant :
une unité de détermination de route à embouteillage adaptée pour déterminer des routes correspondant au trajet de déplacement du véhicule (4) transmis par l'unité de transmission d'informations (33) dans une situation d'embouteillage ;
une unité d'acquisition d'informations de trajet de déplacement (20) adaptée pour acquérir les informations concernant un trajet de déplacement du véhicule (4) reconnu dans le réseau de communication de téléphone mobile (5) à partir du réseau de communication de téléphone mobile (5) ; et
une unité de détermination de route sans embouteillage (20) adaptée pour déterminer que les routes correspondant au trajet de déplacement du véhicule (4) acquis par l'unité d'acquisition d'informations de trajet de déplacement (20), qui ne sont pas comprises dans les routes correspondant au trajet de déplacement du véhicule (4) transmis par l'unité de transmission d'informations (33), ne présentent aucun embouteillage.

2. Système de détermination de situation de circulation selon la revendication 1, dans lequel le centre d'informations (2) comprend en outre une unité de correction adaptée pour corriger le trajet de déplacement du véhicule (4) acquis par l'unité d'acquisition d'informations de trajet de déplacement (20) sur la base du trajet de déplacement du véhicule (4) transmis par l'unité de transmission d'informations (33).

3. Système de détermination de situation de circulation selon la revendication 1 ou 2, dans lequel l'unité de transmission d'informations (33) transmet, lorsque l'unité de détermination d'embouteillage (33) détermine qu'un embouteillage est présent, des informations concernant un trajet de déplacement du véhicule (4) se déplaçant sur une route sur laquelle la présence d'un embouteillage a été déterminée et sur une route adjacente à la route sur laquelle la présence d'un embouteillage a été déterminée au centre d'informations (2).
